# EUROPEAN PATENT SPECIFICATION

(11) **EP 2 930 560 B1**
(45) Date of publication and mention of the grant of the patent: **14.02.2018**
(21) Application number: 14001472.1
(22) Date of filing: 24.04.2014
(51) Int. Cl.: H04N 5/232, G03B 37/00

(54) **Mobile communication device multidirectional/wide angle camera lens system**
Mobilkommunikationsvorrichtung / Weitwinkelkameralinsensystem
Système d'objectif de caméra à grand angle / multidirectionnel de dispositif de communication mobile

(30) Priority: 11.04.2014 US 201414251277
(43) Date of publication of application: 14.10.2015
(73) Proprietor: Onyenobi, Timothy, Manchester M40 8BB (GB)
(72) Inventor: Onyenobi, Timothy, Manchester M40 8BB (GB)

(56) References cited:
- EP-A2- 2 015 565
- WO-A1-2013/162585
- JP-A- 2009 086 513
- KR-A-102050 083 352
- US-A1- 2010 039 549
- US-A1- 2012 262 540

## Description

### BACKGROUND OF THE INVENTION

The present invention is in the field of mobile communication devices. It is a mobile communication device multi directional/wide angle camera lens system (projecting or non-projecting/protruding from mobile communication device) which relates to a camera or system of cameras (enclosed or not enclosed) which could either be fixed or retractable (manually or automatically), such that mobile communication device users as a result are able to have a much wider cone of vision either in a single capture or by directing the live camera capture lens using a software program within the mobile communication device. This Mobile communication device multidirectional/wide angle camera lens system can be located on any part of the mobile communication device.

Mobile communication device camera is used for various purposes and since the 21^{st} century and is becoming more widely used and gradually replacing the traditional unidirectional hand held camera. The consumer demand for mobile communication device camera has also increased greatly due to the increased quality of still photograph and live video capture and especially as the mobile communication device camera can be integrated and/or interfaced with mobile communication device applications. The mobile communication device camera has been harnessed to enhance phone communication using numerous video/voice communication applications. The traditional mobile communication device camera has made possible numerous mobile communication device application (APP) programmed to harness the mobile communication device camera potential. Though the mobile communication device camera is able to provide a highly important mobile communication device hardware benefits for numerous mobile communication device applications, the fixed nature of the camera lens as well as its rigid unidirectional attribute presents a significant limitation for mobile communication device application innovation and use some of which could potentially save lives.

However, the current use of mobile communication device camera is limited to the capture angle capability of a fixed camera lens either forward facing or backward facing; this has a limited capture cone and the use for this camera type is limited hence mobile communication devices, mobile communication device applications are currently built around this fixed unidirectional camera lens. This unidirectional camera lens found in current mobile communication devices can only capture video feeds or images within its fixed cone and In order to capture video or images outside this capture cone, the user has to orient or move the mobile communication device appropriately; this limits the user's use of the camera in terms of capture range and numerous innovative application which could make use of a better technology. A common problem is when a mobile communication device camera user wants to take a photograph and has a line-up of capture targets outside capture cone, the user tends to move further away to be able to ensure that all of the capture target is within the capture cone; by so doing the capture target size is reduced hence it becomes more difficult to identify the elements that makes up the capture target within the frame, hence poor quality images or videos. Numerous mobile communication device safety applications whose effectiveness (which could potentially save lives) relies on the camera lens capture cone limits would hence be limited. The Mobile communication device multidirectional/wide angle camera lens system is able to solve this problem. Example of conventional mobile communication devices are disclosed in US 2012/0262540 A1, WO 2013/162585 A1 and KR 10-2005-0083352 A.

### BRIEF SUMMARY OF THE INVENTION

This is a system where a mobile communication device camera is able to capture a panoramic view either through a camera lens or system of lenses projecting (enclosed or not enclosed) beyond the camera surface in other to be able to capture a wide angle or panoramic view larger than what is possible by the traditional mobile communication device fixed unidirectional camera lens; or a system of camera lenses embedded within the body of the mobile communication device (enclosed or not enclosed). The angle covered by this system will allow wider angle video, live video, still image capture. It will also allow mobile communication device applications to innovate software applications which make use of the ability of the Mobile communication device multidirectional/wide angle camera lens system to pan and set camera lens view positions.

### BRIEF DESCRIPTION OF THE SEVERAL VIEWS OF THE DRAWING

Figure 1 shows the camera lens capture angle video and camera for the mobile communication device multi directional/wide angle camera lens system in comparison with the traditional mobile communication device camera capture angle as viewed from the side of the device.
Figure 2 shows the camera lens capture angle video and camera for the mobile communication device multi directional/wide angle camera lens system in comparison with the traditional mobile communication device camera capture angle as viewed from the top or bottom of the device.
Figure 3 shows a projecting/protruding single or multiple camera lens system, not part of the invention, which can be movable (automatic and/or manual control) or static all within a transparent, semi-transparent or opaque enclosure of any shape size or form.
Figure 4 shows a projecting/protruding single lens system not part of the invention, which can be movable (automatic and/or manual control) or static and is not enclosed.
Figure 5 shows a projecting/protruding multiple lens system, not part of the invention, which can be movable (automatic and/or manual control) or static and is not enclosed.
Figure 6 shows a non-projecting/non-protruding single or multiple camera lens, not part of the invention, which can be movable (automatic and/or manual control) all within a transparent, semi-transparent or opaque flat/semi protruding enclosure of any shape size or form.
Figure 7 shows a non-projecting/non-protruding single lens system, not part of the invention, which can be movable (automatic and/or manual control) and is not enclosed.
Figure 8 shows a non-projecting/non-protruding multiple lens, not part of the invention, which can be movable (automatic and/or manual control) or static and is not enclosed.
Figure 9 shows a mobile communication device with a spherical (or any other shape) camera lens system integrated anywhere along the side perimeter/edge of the mobile communication device.
Figure 10 shows a mobile communication device, not part of the invention, with a protruding camera lens system of any shape integrated anywhere along the side perimeter/edge of the mobile communication device.
Figure 11 shows a mobile communication device with two spherical (or any other shape) protruding camera lens systems integrated on the corners of the mobile communication device.
Figure 12 shows a mobile communication device, not part of the invention, with two flushed (or any other shape) camera lens systems integrated on the corners of the mobile communication device.

### DETAILED DESCRIPTION OF THE INVENTION

This invention is a mobile communication device multi directional/wide angle camera lens system which relates to providing wider angle camera view capability to the device through repositioning and/or automating the camera lens. This is done in such a way that by projecting the lens beyond the body of the mobile communication device with or without automation, or by simply having multiple omni directional static lenses or a single movable lens without projection, the user of the device is able to capture a wider angle of video feed or image which was original impossible with the traditional unidirectional fixed lens mobile communication device camera.

The captured panoramic view is displayed on the user device in a format which is readable as desired by the user/reader/viewer of the display from the mobile communication device. The images that are displayed can also be controlled by the user of the mobile communication device to view a scene at an angle not directly opposite the panoramic camera but is within its coverage range.

The view on the mobile communication device can also be moved by finger gestures which a user makes on the display and/or controls of the mobile communication device.

The view can also be zoomed within set limits to allow a user see the angle they have positioned the panoramic camera of the device at.

The invention of this mobile communication device multi directional/wide angle camera lens system will now be described solely by way of example with reference to the accompanying drawings in which:

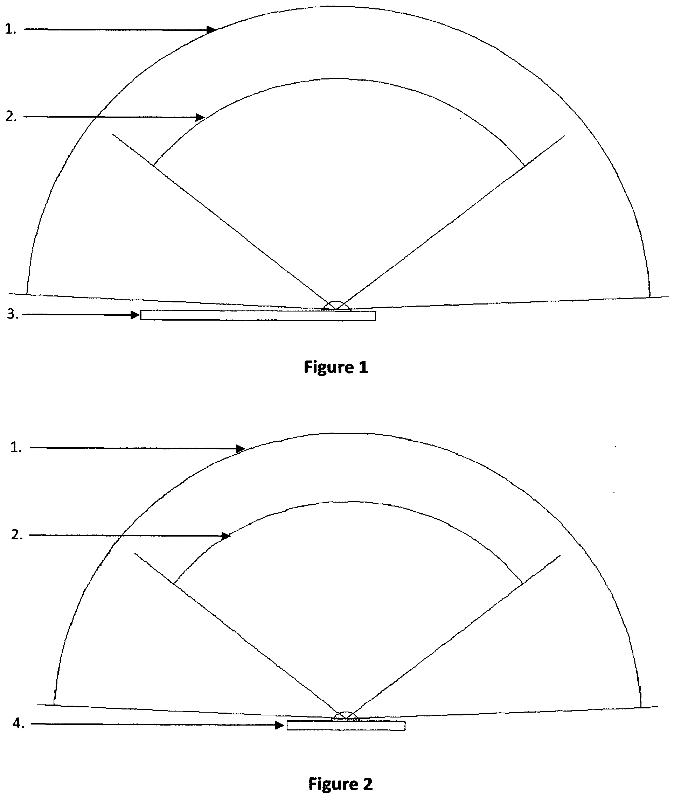

In Figure 1, the landscape side view of a mobile communication device 3 with the panoramic capture angle of the mobile communication device multi directional/wide angle camera lens system 1 is illustrated in comparison with the capture angle 2 of a traditional mobile communication device which is displayed on the mobile communication device dependent on the extents the user chooses to view the scene currently being captured or an angle of the scene within the panoramic view. The user can then zoom in and out of the displayed view to suit their needs.
Figure 2 shows the portrait side view of a mobile communication device 4 with the panoramic capture angle of the mobile communication device multi directional/wide angle camera lens system 1 is illustrated in comparison with the capture angle 2 of a traditional mobile communication device which is displayed on the mobile communication device dependent on the extents the user chooses to view the scene currently being captured or an angle of the scene within the panoramic view. The user can then zoom in and out of the displayed view to suit their needs.

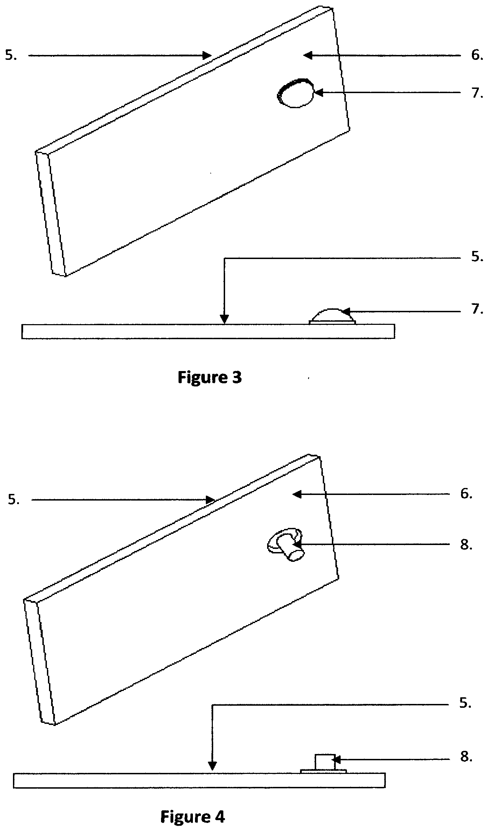

Figure 3 shows the front 5 of a mobile communication device, not part of the invention, the rear or back 6 of the mobile communication device and a projecting/protruding single or multiple camera lens system 7 which can be movable (automatic and/or manual control) or static all within a transparent, semi-transparent or opaque enclosure of any shape size or form.
Figure 4 shows the front 5 of a mobile communication not part of the invention, rear or back 6 of the mobile communication device and a projecting/protruding single camera lens system 8 which can be movable (automatic and/or manual control) or static but is not closed off within the enclosure.

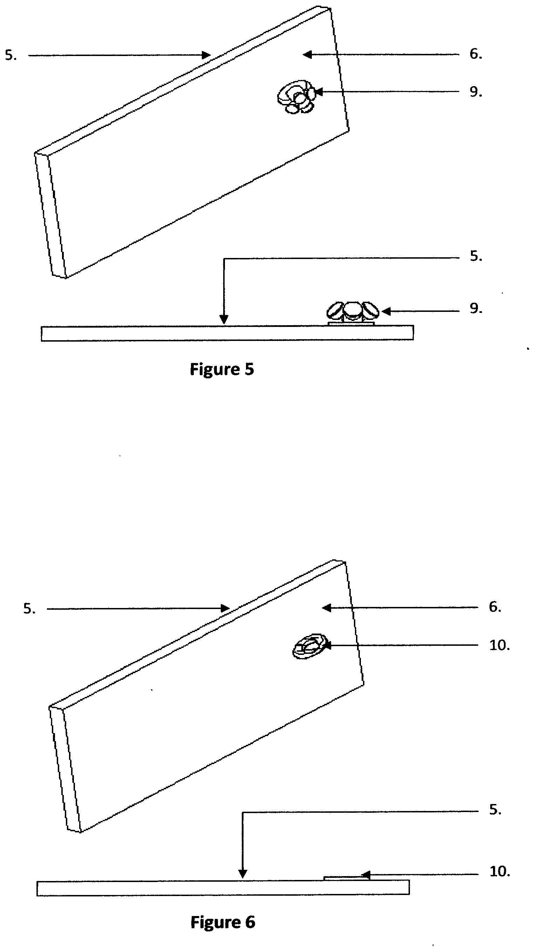

Figure 5 shows the front 5 of a mobile communication not part of the invention, the rear or back 6 of the mobile communication device and a projecting/protruding multiple camera lens system 9 which can be movable (automatic and/or manual control) or static but is not closed off within the enclosure.
Figure 6 shows the front 5 of a mobile communication device, not part of the invention, the rear or back 6 of the mobile communication device and a non-projecting/non-protruding single or multiple camera lens system 10 which can be movable (automatic and/or manual control) all within a transparent, semi-transparent or opaque flat/semi protruding enclosure of any shape size or form.

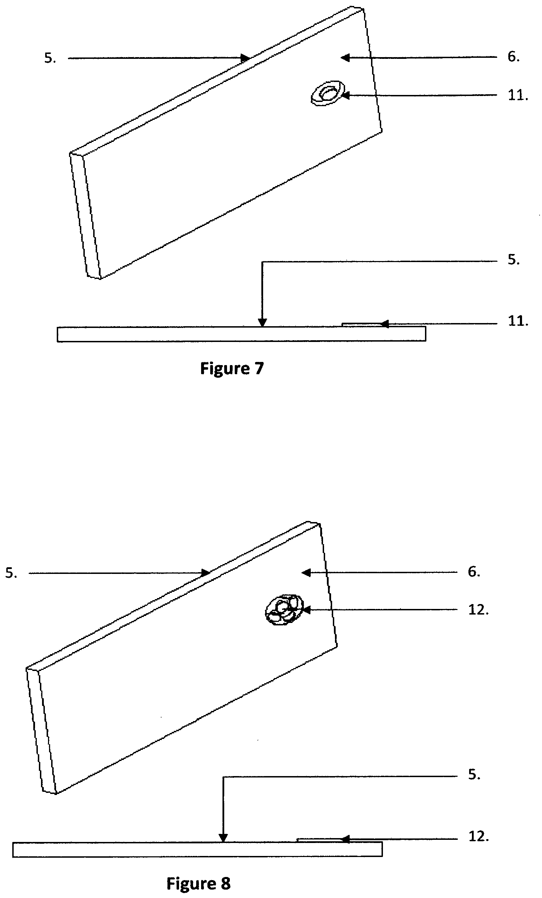

Figure 7 shows the front 5 of a mobile communication device, not part of the invention, the rear or back 6 of the mobile communication device and a non-projecting/non-protruding single camera lens system 11 which can be movable (automatic and/or manual control) and is not closed off within the enclosure.
Figure 8 shows the front 5 of a mobile communication not part of the invention, the rear or back 6 of the mobile communication device and a non-projecting/non-protruding multiple camera lens system 12 which can be movable (automatic and/or manual control) and is not closed off within the enclosure.

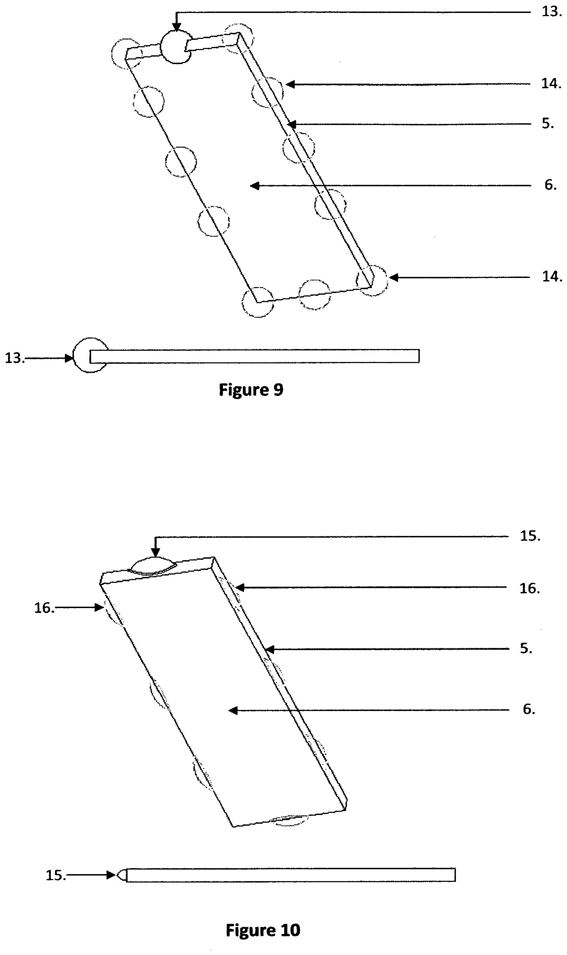

Figure 9 shows the front 5 of a mobile communication device, the rear or back 6 of the mobile communication device and the integration 13 and possible placements 14 of a spherical protruding camera lens system on the side of the mobile communication device.
Figure 10 shows the front 5 of a mobile communication not part of the invention, the rear or back 6 of the mobile communication device and the integration 15 and possible placements 16 of a protruding camera lens system on the on the side of the mobile communication device.

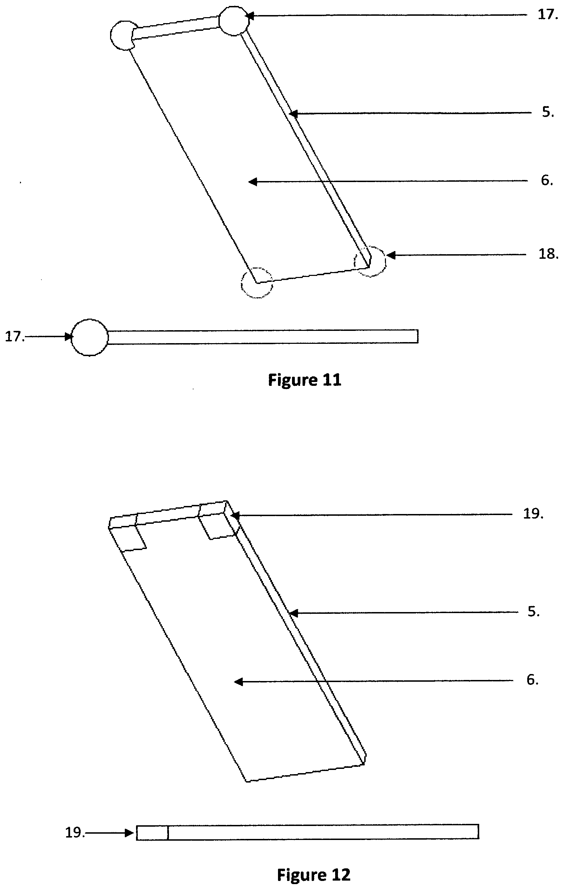

Figure 11 shows the front 5 of a mobile communication device, the rear or back 6 of the mobile communication device and the integration 17 and possible placements 18 for a camera lens system that protrudes on the edges of the mobile communication device.
Figure 12 shows the front 5 of a mobile communication not part of the invention, the rear or back 6 of the mobile communication device and the integration 19 of a camera lens system which has been assimilated onto the diagonal edges of the mobile communication device.

## Claims

1. Mobile communication device comprising
a. at least one panoramic camera provided with a lens, for capturing a wide angle panoramic image or video, and
b. control features using an application on the mobile communication device for controlling the panoramic image or video captured by the at least one camera ***characterized by*** four lenses of four panoramic cameras, each located on one of the four corners of the mobile communication device, and a display for displaying a three-dimensional image by coupling of scenes being captured by the lenses.

2. Device according to claim 1 ***characterized by***
a. a display for displaying a view captured by the at least one camera in a comprehensible format for a user,
b. means for the user controlling an angle of the view within extents of the view,
c. means for focussing the view on an angle within the view, and
d. means for zooming the view in and out to highlight more details of the angle within the view.

3. Device according to claim 1 ***characterized by** in that* the lenses are
a. enclosed or non-enclosed,
b. projecting or non-projecting,
c. movable or static, and
d. automatically and/or manually controlled.

4. Device according to claim 1 ***characterized in that*** the lenses project out from an enclosure, wherein a camera projection is of regular shape such as spherical, hemispherical, oval, cube, cuboid, star, any polygon or of irregular shape, and wherein the camera projection is immovable or movable along a surface of the device or a rotation.

5. Device according to claim 1 ***characterized in that*** the lenses project out from an enclosure, wherein a projection is fixed to an edge, surface or corner of the device, or is manually or automatically retractable, and wherein the projection can be triggered by the user and/or any other external, namely environmental, physical, electromagnetic, electrical, mechanical, or internal factor, namely by a phone application/software.

6. Device according to claim 1 ***characterized by***
a. a camera capturing communication device,
b. a camera lens system that projects out from an enclosure, and
c. sensors within a camera for single or multiple lens system,
wherein the lens system is
d. static or movable,
e. pointed in any single direction or in multiple directions,
f. responsive to gyroscope or not responsive to gyroscope and
g. within an enclosure, that is in particular made of a transparent, semi-transparent or opaque material or of a combination of materials.

## Patentansprüche

1. Mobiles Kommunikationsgerät umfassend
a. mindestens eine Panoramakamera, die mit einem Objektiv versehen ist, um ein Weitwinkel-Panoramabild oder -video aufzunehmen, und
b. Steuermerkmale unter Verwendung einer Anwendung auf dem mobilen Kommunikationsgerät zum Steuern des durch mindestens eine Kamera erfassten Panoramabildes oder Videos, **gekennzeichnet durch** vier Objektive von vier Panoramakameras, die jeweils an einer der vier Ecken des mobilen Kommunikationsgeräts angeordnet sind, und ein Display für Anzeigen eines dreidimensionalen Bildes durch Koppeln von Szenen, die von den Linsen aufgenommen werden.

2. Vorrichtung nach Anspruch 1, **gekennzeichnet durch**
a. eine Anzeige zum Anzeigen einer von der mindestens einen Kamera aufgenommenen Ansicht in einem für einen Benutzer verständlichen Format,
b. Mittel für den Benutzer, der einen Winkel der Ansicht innerhalb von Ausmaßen der Ansicht steuert,
c. Mittel zum Fokussieren der Ansicht auf einen Winkel in der Ansicht, und
d. bedeutet, dass die Ansicht vergrößert und verkleinert wird, um mehr Details des Winkels in der Ansicht hervorzuheben.

3. Vorrichtung nach Anspruch 1 **dadurch gekennzeichnet, daß** die Linsen sind
a. eingeschlossen oder nicht eingeschlossen
b. projizierend oder nicht projizierend
c. beweglich oder statisch, und
d. automatisch und / oder manuell gesteuert.

4. Vorrichtung nach einem der Ansprüche 1 bis 3, **dadurch gekennzeichnet, dass** die Linsen aus einer Umhüllung herausragen, wobei eine Kameraprojektion von regelmäßiger Form ist, wie sphärisch, halbkugelförmig, oval, kubisch, quaderförmig, sternförmig, beliebiges Vieleck oder von unregelmäßiger Form, und wobei der Kameravorsprung ist unbeweglich oder entlang einer Oberfläche der Vorrichtung oder einer Drehung bewegbar.

5. Vorrichtung nach einem der Ansprüche 1 bis 4, **dadurch gekennzeichnet, dass** die Linsen aus einer Umhüllung herausragen, wobei ein Vorsprung an einer Kante, Fläche oder Ecke der Vorrichtung befestigt ist, oder manuell oder automatisch einziehbar ist, und wobei die Projektion von der Projektionsfläche aus ausgelöst werden kann Benutzer und / oder irgendeinen anderen externen, nämlich Umwelt, physischen, elektromagnetischen, elektrischen, mechanischen oder internen Faktor, nämlich durch eine Telefonanwendung / Software.

6. Vorrichtung nach Anspruch 1 **gekennzeichnet durch**
a. eine Kamera, die ein Kommunikationsgerät erfasst
b. ein Kameraobjektivsystem, das aus einem Gehäuse herausragt, und
c. Sensoren innerhalb einer Kamera für einzelne oder mehrere Linsensysteme, wobei das Linsensystem ist
d. statisch oder beweglich,
e. in irgendeine Richtung oder in mehrere Richtungen gerichtet,
f. reagiert auf Gyroskop oder nicht auf Gyroskop und
g. innerhalb eines Gehäuses, das insbesondere aus einem transparenten, halbtransparenten oder opaken Material oder einer Kombination von Materialien besteht.

## Revendications

1. Dispositif de communication mobile comprenant
a. au moins une caméra panoramique munie d'un objectif, pour capturer une image panoramique ou une vidéo grand angle, et
b. dispositifs de commande utilisant une application sur le dispositif de communication mobile pour commander l'image panoramique ou vidéo capturée par au moins une caméra **caractérisée par** quatre lentilles de quatre caméras panoramiques, chacune située sur l'un des quatre coins du dispositif de communication mobile, et un affichage pour afficher une image tridimensionnelle en couplant des scènes capturées par les lentilles.

2. Dispositif selon la revendication 1 **caractérisé par**
a. un affichage pour afficher une vue capturée par la au moins une caméra dans un format compréhensible pour un utilisateur,
b. des moyens pour l'utilisateur contrôlant un angle de la vue dans les limites de la vue,
c. des moyens pour focaliser la vue sur un angle dans la vue, et
d. des moyens pour zoomer la vue vers l'intérieur et vers l'extérieur pour mettre en évidence plus de détails de l'angle dans la vue.

3. Dispositif selon la revendication 1 **caractérisé en ce que** les lentilles sont
a. fermé ou non-fermé
b. en projet ou non-projeté
c. mobile ou statique, et
d. automatiquement et / ou manuellement contrôlé.

4. Dispositif selon la revendication 1 **caractérisé en ce que** les lentilles dépassent d'une enceinte, dans laquelle une saillie de caméra est de forme régulière telle que sphérique, hémisphérique, ovale, cubique, cuboïde, étoile, polygone quelconque ou de forme irrégulière, et dans laquelle la projection de la caméra est fixe ou mobile le long d'une surface de l'appareil ou d'une rotation.

5. Dispositif selon la revendication 1 **caractérisé en ce que** les lentilles dépassent d'une enceinte, dans laquelle une saillie est fixée sur un bord, une surface ou un coin du dispositif, ou est escamotable manuellement ou automatiquement, et dans lequel la saillie peut être déclenchée par le utilisateur et / ou tout autre facteur externe, à savoir environnemental, physique, électromagnétique, électrique, mécanique ou interne, à savoir par une application / un logiciel de téléphonie.

6. Dispositif selon la revendication 1 **caractérisé par**
a. une caméra capturant un dispositif de communication
b. un système d'objectif de caméra qui sort d'une enceinte, et
c. des capteurs dans une caméra pour un système de lentilles unique ou multiple, dans lequel le système de lentilles est
d. statique ou mobile,
e. pointé dans une direction unique ou dans plusieurs directions,
f. sensible au gyroscope ou ne répond pas au gyroscope et
g. dans une enceinte, notamment réalisée en un matériau transparent, semi-transparent ou opaque ou une combinaison de matériaux.
